# EUROPÄISCHE PATENTSCHRIFT

(11) **EP 2 485 862 B1**
(45) Veröffentlichungstag und Bekanntmachung des Hinweises auf die Patenterteilung: **24.07.2013**
(21) Anmeldenummer: 10755166.5
(22) Anmeldetag: 20.09.2010
(51) Int. Cl.: B23K 26/03, B23K 26/067, B23K 26/24, B23K 26/42, B23K 26/04

(54) **FÜGEVORRICHTUNG FÜR EIN STOFFSCHLÜSSIGES FÜGEN MITTELS EINES ZUSATZWERKSTOFFES UNTER VERWENDUNG VON MESSAUFNEHMERN**
JOINING DEVICE FOR NON-POSITIVE JOINING BY MEANS OF A FILLER MATERIAL USING SENSORS
DISPOSITIF D'ASSEMBLAGE POUR UN ASSEMBLAGE PAR ADHÉSION DE MATIÈRE AU MOYEN D'UNE MATIÈRE SUPPLÉMENTAIRE AVEC L'UTILISATION D'ENREGISTREURS DE MESURE

(30) Priorität: 06.10.2009 DE 102009045400
(43) Veröffentlichungstag der Anmeldung: 15.08.2012
(73) Patentinhaber: Scansonic MI GmbH, 13086 Berlin (DE); Bayerische Motoren Werke AG, 80788 München (DE)
(72) Erfinder: BERNDL, Jürgen, 85405 Nandlstadt (DE); WALTER, Steffen, 13129 Berlin (DE); KISCHKE, Thomas, 16548 Glienicke (DE); HASCHKE, Igor, 10437 Berlin (DE)
(74) Vertreter: Eisenführ, Speiser & Partner
(86) Internationale Anmeldenummer: PCT/EP2010/063779
(87) Internationale Veröffentlichungsnummer: WO 2011/042292

(56) Entgegenhaltungen:
- EP-A1- 1 568 435
- WO-A1-90/11161
- DE-U1-212004 000 016
- JP-A- 4 238 680

## Beschreibung

Die Erfindung betrifft eine Fügevorrichtung für ein stoffschlüssiges Fügen mittels eines Zusatzwerkstoffes mit einer Zuführeinrichtung für einen Draht als Zusatzwerkstoff, die ausgebildet ist, den Draht in Betrieb der Fügevorrichtung mit einer vorgegebenen Vorschubgeschwindigkeit zuzuführen, und einer Leiteinrichtung für einen Energiestrahl mit mindestens zwei Teilstrahlen zum Schmelzen des Drahtes (siche, z.B., EP1 568 435).

Aus DE 10 2006 056 252 A1 ist eine Vorrichtung zur Führung eines Energiestrahls entlang eines Stoßes zweier mittels eines Energiestrahls zu verbindenden Werkstücken bekannt. Ferner ist ein Führungsfinder vorgesehen, der mit einer Andruckkraft gegen den Stoß vorgespannt wird.

DE 10 2006 060 116 A1 zeigt einen Laserbearbeitungskopf. Es ist ein Sensor vorgesehen, der einem Draht zugeordnet ist und mittels dem eine auf den Draht wirkende Kraft gemessen wird.

Eine Vorrichtung der eingangs genannten Art ist beispielsweise aus der DE 10 2004 025 873 A1 bekannt. Bei der darin beschriebenen Vorrichtung wird ein Laserstrahl in eine Mehrzahl von Teilstrahlen aufgespalten, die von einer Fokussierlinse in den Arbeitsbereich fokussiert werden. Die Fokussierlinse hat eine zentrische Öffnung, durch die hindurch der Zusatzwerkstoff geführt ist. Es liegt also eine koaxiale Drahtzuführung vor.

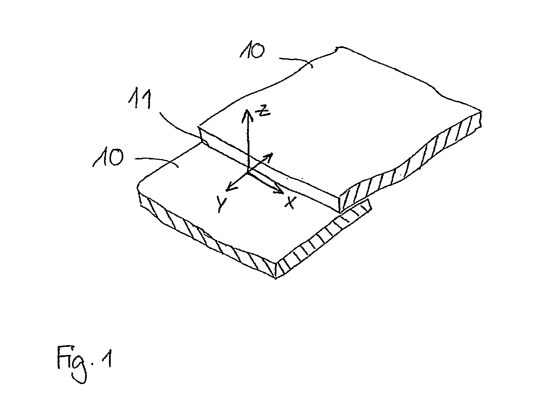

Mit einer solchen Ausbildung ist eine von einem abschmelzenden Draht erzeugte Fügenaht nicht exakt entlang einer Stoßfuge zweier Bauteile mit einer gleichbleibenden Nahtqualität herstellbar, wenn sich die Lage der Stoßfuge z.B. aufgrund von Toleranzen in den Bauteilen ändert. Die Fügevorrichtung ist im laufenden Betrieb nicht genau genug zu einer sich auch nur minimal ändernden Stoßfuge positionierbar, d.h. die Teilstrahlen und der Draht können sich nicht bzw. vernachlässigbar gering in und quer zur Vorschubrichtung der Fügevorrichtung sowie vertikal bewegen (d.h. in x-, y- und z-Richtung in Fig. 1). Dies kann dazu führen, dass die Tiefe und der Anbindungsquerschnitt der erzeugten Fügenaht nicht optimal sind.

Aufgabe der Erfindung ist es,eine Fügevorrichtung bereitzustellen, mit Hilfe derer eine optimale Fügennaht herstellbar ist..

Zu diesem Zweck sieht die Erfindung eine Fügevorrichtung eingangs genannter Art vor, wobei die Fügevorrichtung einen ersten Messaufnehmer zum Erfassen einer lateralen Auslenkung des Drahtes sowie einen zweiten Messaufnehmer zum Erfassen einer mit dem Vorschub des Drahtes verbundenen Größe aufweist, wobei die Leiteinrichtung für den Energiestrahl mit dem ersten und dem zweiten Messaufnehmer verbunden und derart konfiguriert ist, dass der Energiestrahl in Abhängigkeit von Ausgangssignalen des ersten und des zweiten Messaufnehmers ausgelenkt und/oder fokussiert wird.

Erfindungsgemäß wird bei einer Änderung der Lage des Drahtes in einer Stoßfuge nicht die Lage der gesamten Fügevorrichtung zu den zu verbindenden Bauteilen und der Stoßfuge geändert, sondern lediglich die Lage des Energiestrahls relativ zum Draht korrigiert. Der Energiestrahl wird in Abhängigkeit von der Position des Drahtes (d.h. in x- und/oder γ-Richtung d. Fig. 1) ausgelenkt und/oder in z-Richtung fokussiert. Der Energiestrahl wird insbesondere so ausgelenkt und/oder fokussiert, dass der Draht zwischen den mindestens zwei Teilstrahlen liegt. In dieser Stellung des Drahtes wird eine optimale Fügenaht erreicht. Erfindungsgemäß werden durch die nachträglich, während des Betriebes mögliche Auslenkung und/oder Fokussierung des Energiestrahls Toleranzen der zu verbindenden Bauteile ausgeglichen. Dadurch wird eine reproduzierbare, hohe Nahtqualität erreicht und die Prozesssicherheit erhöht.

Vorzugsweise enthält der erste Messaufnehmer einen Sensor, der mit der Zuführeinrichtung oder dem Draht verbunden und ausgebildet ist, die aus einer lateralen Auslenkung des Drahtes resultierende Kraft zu erfassen, dadurch wird die laterale Lage des Drahtes zur Stoßfuge detektiert. Dabei ist der verwendete Begriff "laterale" Auslenkung in der gesamten Anmeldung als Auslenkung in x- oder y-Richtung zu verstehen. Für eine orientierungsunabhängige Ausführung wird die Kraft in x- und y-Richtung detektiert.

Dabei kann ein an der Fügevorrichtung angeordneter, optischer Sensor, z.B. eine Kamera vorgesehen sein. Die Kamera ist dann so an der Fügevorrichtung angeordnet, dass sie den Draht hinterleuchtet und der Draht auf einem optischen Element zur Ermittlung des optischen Schwerpunktes desselben abgebildet wird. Als optisches Element, auf das der Draht abgebildet wird, kann zum Beispiel eine Quadrantenfotodiode (kurz QPD), ein Position Sensitive Device (kurz PSD) oder eine Fotodiodenzelle (kurz PDA) verwendet werden. Dadurch wird die laterale Lage (d.h. die Lage des Drahtes in x- und/oder y-Richtung) des Drahtes zur Stoßfuge und insbesondere die Verformung detektiert, die der Draht durch die Anpresskraft gegen die Stoßfuge erfährt. Auch könnte durch Beobachtung der Relativlage der Stoßfuge zu den von den Teilstrahlen des Energiestrahls gebildeten Strahlflecken die laterale Lage der Stoßfuge detektiert werden.

Alternativ ist der Sensor ein induktiver Sensor, der ein elektromagnetisches Feld aussendet, welches in einem vorbeigeführten, elektrisch leitenden Material, hier der Draht, Wirbelströme hervorruft. Ein Oszillator erkennt die Änderung der Wirbelströme. Die Verformung, die der Draht durch die Anpresskraft gegen die Stoßkante erfährt, kann so detektiert werden und damit die laterale Lage des Drahtes. Der Sensor kann auch ein Kraftsensor sein.

Der erste Messaufnehmer weist vorzugsweise eine Kamera und eine Auswerteeinrichtung auf, wobei die Auswerteeinrichtung ein von der Kamera erzeugtes Bild auswertet, um die Lage des Drahtes zur Stoßfuge zu erfassen. Insbesondere wird anhand von Grauwertmerkmalen, also Helligkeits- oder Intensitätswerten eines Bildpunktes, und/oder Farbmerkmalen die Lage der Stoßfuge erfasst.

Vorzugsweise enthält der zweite Messaufnehmer einen Sensor, der mit der Zuführeinrichtung oder dem Draht verbunden und ausgebildet ist, die mit dem Vorschub des Drahtes verbundene Größe zu erfassen.

Der Draht ist dabei beispielsweise in einem Bowdenzug geführt, wobei der Bowdenzug beispielsweise um 90° umgelenkt ist, um eine Entkopplung der Kräfte, mit denen der Draht eingeschoben wird, zu erreichen. Der Bowdenzug ist im Bereich der Zuführeinrichtung an einer Halterung befestigt, so dass sich dieser aufgrund der Vorschubkraft des Drahtes von der Stoßfuge wegdrücken will. Diese Kraft kann z.B. mit Hilfe eines Wegsensors, der im Bereich der Halterung angeordnet ist, erfasst werden. Ein solcher Wegsensor kann ein federelastisches Element sein, dessen Stauchungsgrad die auf den Draht wirkende Vorschubkraft angibt. Anstelle eines Bowdenzuges könnte der Draht in einem Rohr aufgenommen sein. Alternativ können Rollen im Bereich der Halterung vorgesehen sein, die eine auf den Draht wirkende Kraft erfassen. Ganz allgemein kann ein Dehnmessstreifen, ein Kraftsensor, ein Wegsensor vorgesehen sein, der die mit dem Vorschub des Drahtes verbundene Größe erfasst.

Bevorzugt ist ein Sensor zum Erfassen der vertikalen Auslenkung (d.h. in z-Richtung) des Drahtes bzw. der Zuführeinrichtung vorgesehen.

Dabei kann ein kapazitiver Sensor verwendet werden, der sich vorzugsweise in der Drahtdüse befindet. Ein kapazitiver Sensor arbeitet dabei ganz allgemein mit einem hochfrequenten Schwingkreis, der mittels eines Kondensators ein elektrisches Feld erzeugt. Nähert sich ein fester Stoff diesem Feld, so kommt es zu einer Kapazitätsänderung und damit im Schwingkreis zu einer Veränderung der Verstärkung. Sobald diese Verstärkung einen Schwellenwert überschreitet, wird ein Schaltsignal generiert.

Genauso gut kann der Sensor zur Erfassung der vertikalen Auslenkung ein Autokorrelationssensor sein, der in eine Kamera eingesetzt ist. Der Korrelationssensor ist im koaxialen Strahlengang platziert und regelt die optischen Elemente so, dass diese immer scharf gestellt sind. So kann die Vorrichtung optisch in z-Richtung geregelt werden.

Gemäß der bevorzugten Ausführungsform sind die mindestens zwei Teilstrahlen des Energiestrahls im Wesentlichen symmetrisch zum Draht geführt, wobei zwischen einem Teilstrahl des Energiestrahls und dem Draht ein Winkel von mindestens 5° vorliegt. Es ergibt sich eine effektive Zuführung des Drahtes und somit eine hohe Fügequalität mit einer ausreichenden Nahttiefe, da der Draht mittig zu den Teilstrahlen zugeführt wird. Die vertikale Wirkrichtung für die Bewegung des Drahtes bzw. der Zuführeinrichtung verläuft entlang der z-Achse der Fügevorrichtung. Diese Wirkrichtung kann auch um einen Winkel geneigt sein, sodass eine Bewegung des Drahtes entlang des geneigten Energiestrahls erfolgt.

Bevorzugt ist wenigstens ein Autofokusmodul vorgesehen, dass den Energiestrahl in Abhängigkeit von Ausgangssignalen des ersten und des zweiten Messaufnehmers fokussiert. Über das Autofokusmodulwird der Energiestrahl, also die Teilstrahlen des Energiestrahls, gezielt verändert. Hierbei kann auch vorgesehen sein, dass die einzelnen Teilstrahlen unabhängig voneinander beeinflusst werden. Das Autofokusmodul kann dabei z.B. als Sammellinse, sphärische Linse oder als zueinander gekreuzte Zylinderlinsen ausgebildet sein. Dabei ist die Fokuslage, also der Brennpunkt eines Linsensystems, so veränderbar, dass der Fokus entweder oberhalb der Oberfläche der zu verbindenden Bauteile oder unterhalb derselben liegt. Insbesondere soll der Abstand des jeweiligen Fokus der mindestens zwei Teilstrahlen zum Draht konstant gehalten werden.

Es können ein oder mehrere Beeinflussungsmittel in Form eines Spiegels oder eine planparallele Platte vorgesehen sein, die den Energiestrahl auslenken und/oder teilen. Der Spiegel und/oder die planparallele Platte werden unter einem Winkel zum Energiestrahl angeordnet, dadurch ändert sich der Strahlengang des Energiestrahls. Genauso gut ist es vorstellbar, dass der Spiegel und/oder die planparallele Platte gezielt vor oder während des Löt- bzw. Schweißvorgangs in unterschiedliche Stellungen geschwenkt werden. Dabei werden die Teilstrahlen relativ zum Drahtende ausgerichtet.

Insbesondere ist ein Tastelement vorgesehen, wobei die auf das Tastelement wirkende vertikale und/oder laterale Kraft detektierbar ist.

Gemäß einer Ausführungsform ist eine Düse mit einem Schlitz vorgesehen, mittels der der Draht zugeführt wird. Der Schlitz ist dabei in Vorschubrichtung (x-Richtung) in die Düse eingebracht. Dies ermöglicht eine Bewegung des Drahtes in x-Richtung bei großer freier Drahtlänge.

Die Leiteinrichtung für den Energiestrahl ist bevorzugt derart konfiguriert, dass der Energiestrahl quer und in Vorschubrichtung, d.h. in y- und x-Richtung, ausgelenkt wird. Somit sind prinzipiell das Messen und das Auslenken in zwei Richtungen möglich.

Zusätzlich kann der Energiestrahl erfindungsgemäß in Abhängigkeit von Ausgangssignalen des ersten und des zweiten Messaufnehmers in der Bearbeitungsebene im Abstand zum Drahtauftreffpunkt konstant gehalten werden.

Es kann dem Prozess koaxial zum Draht und/oder den Energiestrahlen Schutzgas oder Luft zugeführt werden. Das zugeführte Gas dient als Prozessgas und/oder der Kühlung der wärmebelasteten Bauteile in Prozessnähe.

Weitere Merkmale und Vorteile ergeben sich aus den Unteransprüchen.

Die Erfindung wird nachfolgend anhand einer Ausführungsform beschrieben, die in den Zeichnungen dargestellt ist. In den Zeichnungen zeigen:
- Figur 1: eine schematische Ansicht zweier zu verbindende Bauteile mit einem Koordinatensystem,
- Figur 2: eine Seitenansicht einer erfindungsgemäßen Fügevorrichtung,
- Figur 3: eine teilperspektivische Ansicht der erfindungsgemäßen Fügevorrichtung mit einem Tastelement,
- Figur 4: eine Draufsicht auf einen Energiestrahl und einen Draht,
- Figur 5: eine schematische Seitenansicht der Fügevorrichtung,
- Figur 6: in einem vergrößerten Maßstab den mit X bezeichneten Bereich in Figur 1, und
- Figur 7: in einem vergrößerten Maßstab eine Düse, die der Drahtzuführung dient.

In Figur 1 sind zwei, sich teilweise überlappende Bauteile 10 gezeigt, die im Bereich einer Stoßfuge 11 miteinander verbunden werden sollen. Ein Koordinatensystem erläutert die Richtungen, wobei eine zu erzeugende Fügenaht 12 in x-Richtung verläuft, die vertikale Richtung mit z und die Richtung senkrecht zur erzeugenden Fügenaht, also zur x-Richtung, mit y bezeichnet sind.

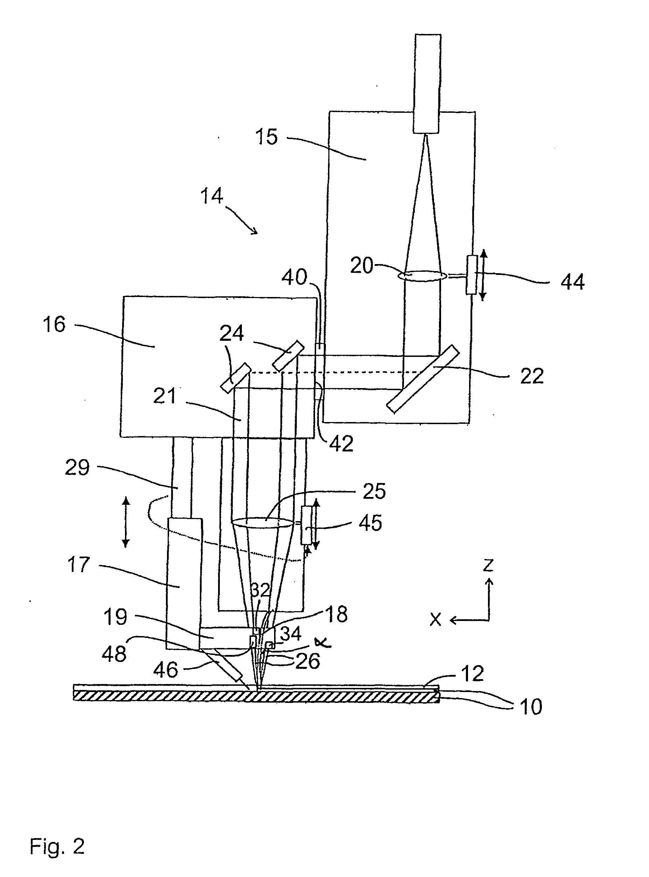

Figur 2 zeigt die zwei sich teilweise überlappenden Bauteile 10, die bereits in einem in Figur 2 gesehen rechten Abschnitt mittels der Fügenaht 12 miteinander verbunden sind. Zur Verbindung der beiden Bauteile ist eine Fügevorrichtung 14 vorgesehen, die sich entlang der Stoßfuge 11 in x-Richtung (vgl. Fig. 1) bewegt.

Die Fügevorrichtung 14 weist ein Befestigungselement 15, ein Bauteil 16 und ein Element 17 mit einem Tastelement 46 und einer Zuführeinrichtung 19 auf, wobei zwischen dem Befestigungselement 15 und dem Bauteil 16 eine Schwenkachse 42 mit einem Schwenkantrieb 40 vorgesehen ist. Das Bauteil 16 und das Element 17 sind um die Schwenkachse 42 schwenkbar.

Zwischen dem Element 16 und dem Element 17 ist ein Teleskoparm 29 vorgesehen, der eine Bewegung in z-Richtung erlaubt. An dem Element 17 ist die Zuführeinrichtung 19 angebracht, über die ein Zusatzwerkstoff, insbesondere ein Draht 18, mit einer vorgegebenen Vorschubgeschwindigkeit zugeführt wird. Das Tastelement 46 ist dabei fest mit der Zuführeinrichtung 19 verbunden.

Ferner weist die Fügevorrichtung 14 eine Leiteinrichtung 21 für wenigstens einen Energiestrahl zum Schmelzen des Zusatzwerkstoffes auf. Der Zusatzwerkstoff wird beim Fügen der Bauteile 10 abgeschmolzen.

Die Leiteinrichtung 21 ist an die Bewegung der Zuführeinrichtung 19 gekoppelt, was durch den punktierten Pfeil in Figur 2 angedeutet ist und was im Folgenden näher erläutert ist.

Der Energiestrahl ist vorzugsweise ein Laserlichtstrahl und über ein erstes Autofokusmodul 20, in Form einer Kollimatorlinse, mehrere Spiegel 22, 24 (in Figur 2 sind drei gezeigt) und ein zweites Autofokusmodul 25, in Form einer Linse, so fokussiert und/oder umgelenkt, dass zwei Teilstrahlen 26 gebildet sind, die nach Austritt aus der Fügevorrichtung 14 im Wesentlichen symmetrisch zum Draht 18 verlaufen, wobei zwischen einem Teilstrahl 26 des Energiestrahles und dem Draht 18 ein Winkel α von mindestens 5° vorliegt. Insbesondere formt das erste Autofokusmodul 20 (schematisch in Fig. 2 gezeigt) ein parallel ausgerichtetes Laserlichtlichtbündel einstellbaren Durchmessers. Der Durchmesser des Laserlichtbündels ist durch Verschieben des ersten Autofokusmoduls 20 entlang der durch den Pfeil angedeuteten Richtung parallel zur optischen Achse einstellbar. Nachdem der Laserlichtstrahl mit Hilfe eines ersten Spiegels 22 umgelenkt ist, erfolgt eine Strahlteilung über zwei versetzt angeordnete Spiegel 24. Zu diesem Zweck ragt einer der beiden versetzt abgeordneten Spiegel nur halb in den Laserlichtstrahl und lenkt somit nur einen Teilstrahl 26, nämlich den halben Laserlichtstrahl, in einer bestimmten Position auf das zweite Autofokusmodul 25. Die zweite Hälfte des Laserlichtstrahls, also der zweite Teilstrahl 26, wird von einem zweiten, versetzt angeordneten Spiegel 24 ebenfalls zum zweiten Autofokusmodul 25 reflektiert und trifft somit an einer anderen Stelle auf das zweite Autofokusmodul 25. Durch diesen Versatz werden zwei separate Teilstrahlen 26 zum Bearbeitungspunkt geformt. Die Aufnahme der Spiegel 24 in der strahlteilenden Umlenkeinheit ermöglicht eine Justage der Spiegel 24 bei der Montage in allen Richtungen. Außerdem ist über diesen Justagemechanismus eine Einstellung der Intensitätsverteilung in den beiden Teilstrahlen möglich. Das System kann sowohl symmetrisch, d.h., mit gleichen Intensitäten in beiden Teilstrahlen justiert werden, als auch davon abweichend mit unterschiedlichen Intensitäten pro Teilstrahl.

Die Optik besitzt also zwei Autofokusmodule. Das erste Autofokusmodul 20 dient der Kollimation des divergierenden Laserlichtstrahls, also der Parallelrichtung des Lichtstrahls, und wird zur Einstellung der Strahlfleckgröße genutzt. Das zweite Autofokusmodul 25 ist eine Sammellinse, mittels der die beiden Teilstrahlen 26 fokussiert und so ausgelenkt werden, dass sie aufeinander zu laufen. Zudem dient das zweite Autofokusmodul 25 der Fokussierung.

Das zweite Autofokusmodul 25 ist an die Bewegung der Zuführeinrichtung 19 in z-Richtung gekoppelt. Insbesondere ist die Zuführeinrichtung 19 über den Teleskoparm 29 mit der Leiteinrichtung 21 verbunden ist, was durch den punktierten Pfeil in Figur 2 angedeutet ist. Der Teleskoparm 29, an dem das Tastelement 46 befestigt ist, ist in z-Richtung verstellbar (vgl. Pfeile in Fig. 2). Auch das zweite Autofokusmodul 25 ist in z-Richtung verstellbar (vgl. Pfeile in Fig. 2). Das zweite Autofokusmodul 25 wird in Abhängigkeit der Auslenkung des Teleskoparms 29 verschoben. Dadurch wird sichergestellt, dass die unter einem Winkel auftreffenden Teilstrahlen 26 immer die gleiche Position in x- und y-Richtung zueinander und zum Draht 18 aufweisen. Bei der Verstellung wird insbesondere ein elektrisch angetriebener Aktor 45 verwendet.

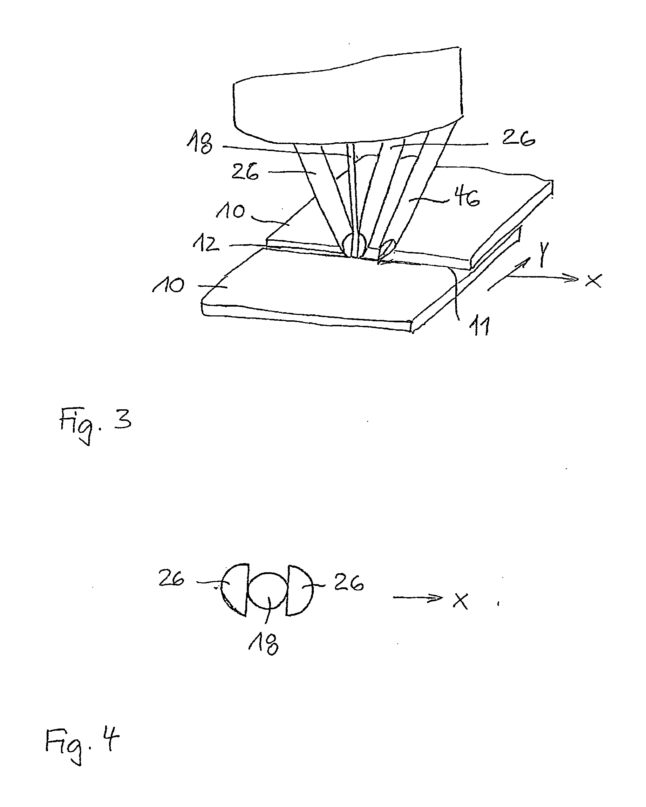

Figur 3 zeigt die beiden Teilstrahlen 26 des Energiestrahls in einer perspektivischen Seitenansicht, dabei ist erkennbar, dass jeder Teilstrahl 26 in Draufsicht gesehen (vgl. Fig. 4) halbkreis- bzw. schalenförmig ist, wobei der Draht 18 in Vorschubrichtung x zwischen den beiden halbkreis- bzw. schalenförmig Teilstrahlen 26 liegt. In dieser Position wird im Betrieb der Fügevorrichtung 14 eine erwünschte Tiefe der Fügenaht 12 erreicht. Es ist möglich, als Benutzereinstellung im montierten Zustand der Bearbeitungsoptik die Positionen der Halbkreise bzw. Halbschalen zum Draht in x-Richtung und gleichermaßen den Abstand der beiden Halbmonde zueinander in x-Richtung einzustellen.

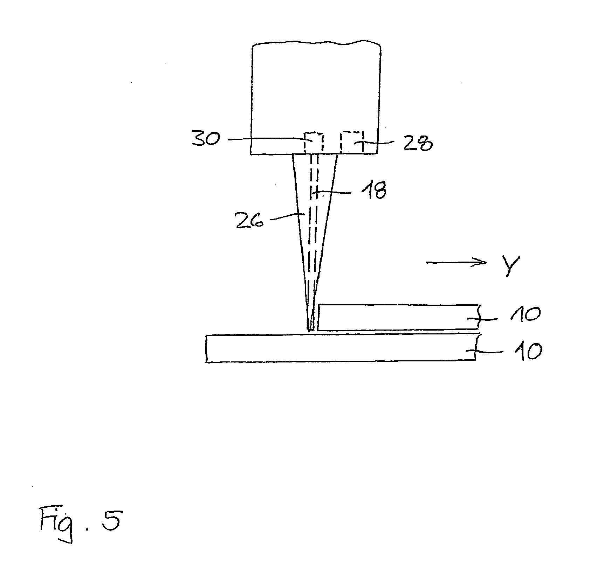

Die Leiteinrichtung 21 für den Energiestrahl ist mit einem ersten Messaufnehmer 28 und einem zweiten Messaufnehmer 30 verbunden, die schematisch in Figur 5 bezeigt sind und auf die im Folgenden eingegangen wird. Die Leiteinrichtung 21 ist derart ausgebildet, dass die Teilstrahlen 26 des Energiestrahls in Abhängigkeit von Signalen der beiden Messaufnehmer 28, 30 ausgelenkt und/oder fokussiert werden. Insbesondere werden die Teilstrahlen 26 seitlich ausgelenkt, indem die Position des oder der Autofokusmodule und/oder ein oder mehrerer Spiegel 22 verändert wird. Durch die Verstellung der Autofokusmodule beispielsweise wird der Fokus der Teilstrahlen 26 verändert. Durch eine seitliche Auslenkung des bzw. der Teilstrahlen 26 wird die Lage des Energiestrahls korrigiert. Die Teilstrahlen 26 können also so relativ zum Ende des Drahtes 18 positioniert werden, dass dieser exakt zwischen den beiden Teilstrahlen 26 liegt, wie es in Figur 4 gezeigt ist.

Die Leiteinrichtung 21 empfängt, wie bereits angesprochen, Signale des ersten Messaufnehmers 28. Der erste Messaufnehmer 28 erfasst eine laterale Auslenkung des Drahtes 18, d.h. eine Auslenkung des Drahtes 18 in y-Richtung. Der erste Messaufnehmer 28 weist eine Kamera 32 auf, die schematisch in Figur 2 gezeigt ist. Die Kamera 32 ist an der Fügevorrichtung 14 angeordnet und erzeugt ein Bild des Drahtes 18. Dieses erzeugte Bild kann von einer Auswerteeinrichtung 34 anhand von Grauwertmerkmalen ausgewertet werden, um die Lage des Drahtes 18 zur Stoßfuge 11 und damit die laterale Auslenkung des Drahtes 18 zu erfassen. In Abhängigkeit der erfassten lateralen Auslenkung des Drahtes 18 wird dann der Energiestrahl ausgelenkt (in x- und/oder y-Richtung) und/oder fokussiert (in y-Richtung). Somit muss bei einer Änderung des Abstandes des Drahtes 18 zur Stoßkante nicht der Abstand der gesamten Fügevorrichtung 14 zur Stoßkante geändert werden, sondern nur die Position des Energiestrahls relativ zum Drahtende.

Alternativ könnte die an der Fügevorrichtung 14 angeordnete Kamera 32 den Draht 18 hinterleuchten. Das Bild des Drahtes 18 wird dann auf einem optischen Element (nicht gezeigt) abgebildet, und eine Auswerteeinrichtung 34 kann die laterale Auslenkung des Drahtes 18 erfassen. Als optisches Element, auf das der Draht 18 abgebildet wird, kann zum Beispiel eine Quadrantenfotodiode (kurz QPD), ein Position-Sensitive-Device (kurz PSD) oder eine Fotodiodenzelle (kurz PDA) verwendet werden.

Die laterale Auslenkung des Drahtes 18 kann auch mit Hilfe eines induktiven Sensors erfasst werden. Ein solcher induktiver Sensor sendet ein elektromagnetisches Feld aus, welches in dem Draht 18 Wirbelströme hervorruft. Ein vorgesehener Oszillator kann eine Änderung der Wirbelströme erkennen. So kann die laterale Auslenkung des Drahtes 18 erfasst werden und ein entsprechendes Signal an die Leiteinrichtung 21 ausgesendet werden.

Genauso gut könnte die Lage des Drahtes 18 mittels Lasertriangulation erfasst werden. Bei der Lasertriangulation wird ein Strahl von einer Lichtquelle auf den Draht ausgesendet und anschließend der reflektierte Strahl von einem Empfänger empfangen. Da der Abstand zwischen der Lichtquelle und dem Empfänger gleich bleibt und bekannt ist, kann die Lage des Drahtes so erfasst werden und ein entsprechendes Signal an die Leiteinrichtung 21 ausgesendet werden.

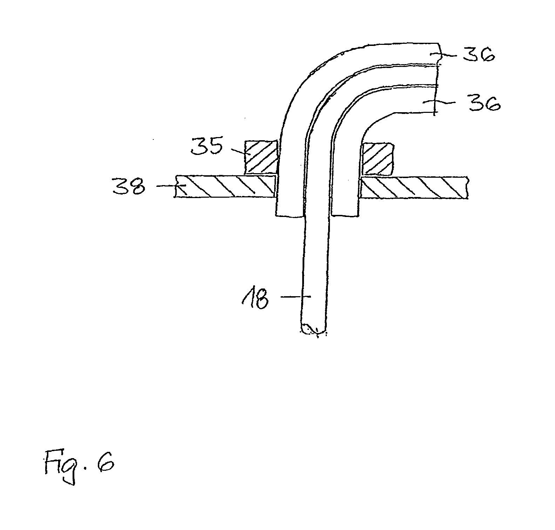

Ferner erhält die Leiteinrichtung 21, wie bereits angesprochen, Signale des zweiten Messaufnehmers 30. Der zweite Messaufnehmer 30 erfasst eine mit dem Vorschub des Drahtes 18 verbundene Größe und weist einen Sensor 35 auf, der in Figur 6 in vergrö-βerter Ansicht dargestellt ist. Der Sensor 35 ist so angeordnet, dass er eine auf ein Ende des Drahtes 18 wirkende Kraft erfasst. Der Draht 18 ist in einem Bowdenzug 36 geführt, wobei der Bowdenzug 36 um 90° umgelenkt ist, um eine Entkopplung von den Kräften zu erreichen, mit denen der Draht 18 vorgeschoben wird. Ein Ende des Bowdenzuges 36 ist an einer Halterung 38 befestigt, so dass sich dieser aufgrund der Vorschubkraft des Drahtes 18 von der zu erzeugenden Fügenaht 12 wegdrücken will. Diese Kraft kann z.B. mit Hilfe des Sensors 35 erfasst werden. Der Sensor 35 ist beispielsweise ein federelastisches Element, dessen Stauchungsgrad die auf den Draht 18 im Bereich der Stoßkante wirkende Vorschubkraft angibt. Anstelle eines federelastischen Elementes kann auch ein Dehnmessstreifen vorgesehen sein, der die mit dem Vorschub des Drahtes verbundene Größe erfasst.

Auch könnte der Draht 18 in einem speziell geformten Rohr aufgenommen sein und axial zur z-Achse auf die Prozessebene auftreffen. Das dazu speziell geformte Röhrchen ermöglicht eine reibkraftarme Zuführung des Drahtes, ermöglicht aber gleichzeitig die Übertragung der durch Abstandsänderungen in z-Richtung auftretenden Kräfte. Das Drahtführmodul ist in alle Richtungen (x-, y- und z-Richtung) einstellbar ausgeführt. Die freie Drahtlänge kann ebenfalls eingestellt werden. Das Drahtführmodul kann dabei an einem Teleskoparm befestigt sein und einen Sensor besitzen, der die Bewegung bzw. die Position in z-Richtung detektiert. Die Bewegung wird durch den auf die Bearbeitungsfläche auftreffenden Draht 18 übertragen. Das Signal wird zur Bewegungsvorgabe für das Linsensystem 20, 24 verwendet.

Alternativ könnten auch Rollen, die eine auf den Draht 18 wirkende Kraft erfassen können, vorgesehen sein.

Die Teilstrahlen 26 des Energiestrahls werden, wie bereits ausgeführt, in Abhängigkeit von Signalen der beiden Messaufnehmer 28, 30 ausgelenkt und/oder fokussiert, um das Ende des Drahtes 18 genau zwischen die Teilstrahlen 26 zu positionieren, wie es in Figur 4 gezeigt ist

Eine größere freie Drahtlänge führt dazu, dass sich der Draht 18 ausbiegt. Deshalb wandert der Draht 18 in den durch die Teilstrahlen 26 gebildeten Zwischenraum, was wiederum zu einer optimalen Abschmelzung führt. Der Draht 18 kann also aufgrund seiner größeren freien Drahtlänge in x-Richtung gesehen etwas vor- und zurückfedern.

In Figur 2 ist ein Schwenkantrieb 40 gezeigt, mittels der ein Teil der Fügevorrichtung 14 entlang einer Schwenkachse 42 verschwenkbar ist, um die laterale Lage des Drahtes 18 und der Teilstrahlen 26 zu ändern. Die laterale Prozessführung (y-Richtung) erfolgt über den Schwenkantrieb 40. Die Führung erfolgt kraftgeregelt. Dabei stützt sich der Draht 18 seitlich am Fügestoß ab. Die dabei auftretenden Kräfte werden von einem Kraftsensor gemessen und über eine entsprechende Regelung an den Schwenkantrieb 40 zur Bewegungsvorgabe weitergegeben. Auch ist ein Aktor 44 an der Fügevorrichtung 14 vorgesehen, der einen Teil der Fügevorrichtung 14 in vertikaler Richtung (d.h. in z-Richtung) bewegen kann. Ferner kann mittels eines weiteren Aktors 45 das zweite Autofokusmodul 25, wie bereits erwähnt, in vertikaler Richtung verstellt werden. Dabei wird die auf das dem Draht 18 vorlaufend angeordnete Tastelement 46 (vgl. Fig. 2 u. 3) wirkende vertikale und/oder laterale Kraft (d.h. in z-Richtung und in y-Richtung) erfasst und somit die Lage der Fügevorrichtung 14 zu den zu verbindenden Bauteilen 10.

Das Tastelement ist in alle Richtungen justierbar und kann einen Kanal (nicht gezeigt) aufweisen, über den während der Herstellung der Verbindung ein Flussmittel und/oder ein Zusatzgas zuführbar ist.

Die Zuführeinrichtung 19 ist mittels eines Aktors 48 (schematisch in Figur 2 gezeigt) in Richtung der zu erzeugenden Fügenaht 12 beaufschlagt, damit der Draht 18 an den zu verbindenden Bauteilen 10 anliegt.

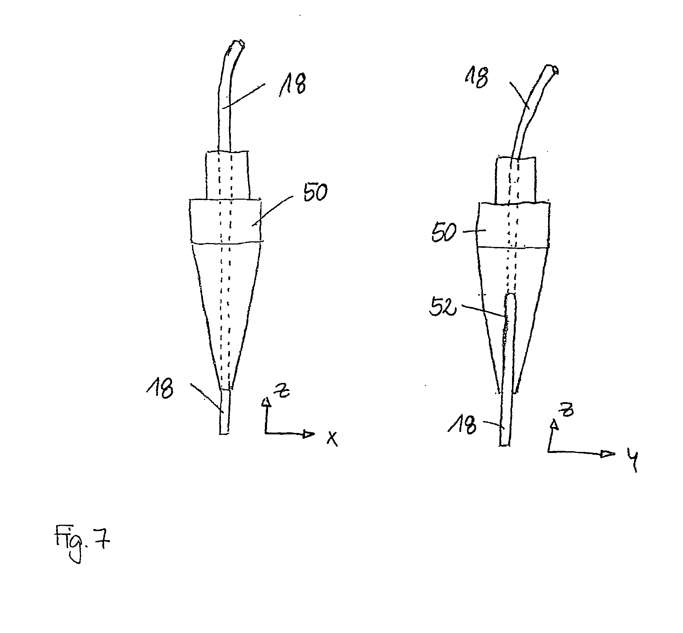

In Figur 7 ist eine Düse 50 gezeigt, mittels der der Draht 18 zugeführt wird. In der Düse 50 ist - in Vorschubrichtung (x-Richtung) gesehen - ein Schlitz 52 eingebracht. Dieser Schlitz 52 ermöglicht eine große freie Drahtlänge in x-Richtung und damit eine Bewegung des Drahtes 18 in Vorschubrichtung, bei gleichzeitig exakter Positionierung des Drahtes 18 in y-Richtung durch die kleine freie Drahtlänge in dieser Richtung.

Es kann dem Prozess koaxial zum Draht und/oder den Energiestrahlen Schutzgas oder Luft zugeführt werden (nicht gezeigt). Das zugeführte Gas dient als Prozessgas und/oder der Kühlung der wärmebelasteten Bauteile in Prozessnähe.

Zusätzlich zu den Autofokusmodulen und den Spiegeln können ferner zwei planparallele Platten vorgesehen sein (nicht gezeigt). Mittels dieser planparallelen Platten kann der Energiestrahl ausgelenkt werden.

## Patentansprüche

1. Fügevorrichtung für ein stoffschlüssiges Fügen mittels eines Zusatzwerkstoffs,
mit einer Zuführeinrichtung für einen Draht (18) als Zusatzwerkstoff, die ausgebildet ist, den Draht (18) im Betrieb der Fügevorrichtung (14) mit vorgegebener Vorschubgeschwindigkeit zuzuführen, und
einer Leiteinrichtung (21) für einen Energiestrahl mit mindestens zwei Teilstrahlen (26) zum Schmelzen des Drahtes (18),
**dadurch gekennzeichnet, dass**
die Fügevorrichtung (14) einen ersten Messaufnehmer (28) zum Erfassen einer lateralen Auslenkung des Drahtes (18) sowie
einen zweiten Messaufnehmer (30) zum Erfassen einer mit dem Vorschub des Drahtes (18) verbundenen Größe aufweist,
wobei die Leiteinrichtung (21) für den Energiestrahl mit dem ersten und dem zweiten Messaufnehmer (28, 30) verbunden und derart konfiguriert ist, dass der Energiestrahl in Abhängigkeit von Ausgangssignalen des ersten und des zweiten Messaufnehmers (28, 30) ausgelenkt und/oder fokussiert wird.

2. Fügevorrichtung nach Anspruch 1, **dadurch gekennzeichnet, dass** der erste Messaufnehmer (28) einen Sensor enthält, der mit der Zuführeinrichtung (19) oder dem Draht (18) verbunden und ausgebildet ist, die aus einer lateralen Auslenkung des Drahtes (18) resultierende Kraft zu erfassen.

3. Fügevorrichtung nach Anspruch 1, **dadurch gekennzeichnet, dass** der erste Messaufnehmer (28) eine Kamera (32) und eine Auswerteeinrichtung (34) aufweist, wobei die Auswerteeinrichtung (34) ein von der Kamera (32) erzeugtes Bild auswertet, um die laterale Auslenkung des Drahtes (18) zu erfassen.

4. Fügevorrichtung nach einem der vorhergehenden Ansprüchen, **dadurch gekennzeichnet, dass** der zweite Messaufnehmer (30) einen Sensor (35) enthält, der mit der Zuführeinrichtung (19) oder dem Draht (18) verbunden und ausgebildet ist, die mit dem Vorschub des Drahtes (18) verbundene Größe zu erfassen.

5. Fügevorrichtung nach Anspruch 4, **dadurch gekennzeichnet, dass** der Draht (18) in einem Bowdenzug (36) geführt ist, wobei das dem Drahtende zugewandte Ende des Bowdenzuges (36) an einer Halterung (38) befestigt ist und der Sensor (35) so angeordnet und ausgebildet ist, dass die am Bowdenzug (36) wirkende Kraft erfassbar ist.

6. Fügevorrichtung nach einem der vorhergehenden Ansprüche, **dadurch gekennzeichnet, dass** ein Sensor zum Erfassen der vertikalen Auslenkung des Drahtes (18) oder der Zuführeinrichtung (19) vorgesehen ist.

7. Fügevorrichtung nach Anspruch 6, **dadurch gekennzeichnet, dass** der Sensor zur Erfassung der vertikalen Auslenkung ein kapazitiver Sensor ist.

8. Fügevorrichtung nach Anspruch 6, **dadurch gekennzeichnet, dass** der Sensor zur Erfassung der vertikalen Auslenkung ein Autokorrelationsssensor ist, der in eine Kamera eingesetzt ist.

9. Fügevorrichtung nach einem der vorhergehenden Ansprüche, **dadurch gekennzeichnet, dass** die mindestens zwei Teilstrahlen (26) des Energiestrahls im Wesentlichen symmetrisch zum Draht (18) geführt sind, wobei zwischen einem Teilstrahl (26) des Energiestrahles und dem Draht (18) ein Winkel (α) von mindestens 5° vorliegt.

10. Fügevorrichtung nach einem der vorhergehenden Ansprüche, **dadurch gekennzeichnet, dass** wenigstens ein Autofokusmodul (20, 25) vorgesehen ist, das den Energiestrahl in Abhängigkeit von Ausgangssignalen des ersten und des zweiten Messaufnehmers (28, 30) fokussiert.

11. Fügevorrichtung nach einem der vorhergehenden Ansprüche, **dadurch gekennzeichnet, dass** ein oder mehrere Beeinflussungsmittel in Form eines Spiegels (22, 24) und/oder einer planparallelen Platte vorgesehen sind, die den Energiestrahl auslenken und/oder teilen.

12. Fügevorrichtung nach Anspruch 10, **dadurch gekennzeichnet, dass** ein Aktor (44, 45) an der Fügevorrichtung vorgesehen ist, der einen Teil der Fügevorrichtung (14) in vertikaler Richtung bewegen kann.

13. Fügevorrichtung nach einem der vorhergehenden Ansprüche, **dadurch gekennzeichnet, dass** ein Tastelement (46) vorgesehen ist, wobei die auf das Tastelement (46) wirkende vertikale und/oder laterale Kraft detektierbar ist.

14. Fügevorrichtung nach einem der vorhergehenden Ansprüche, **dadurch gekennzeichnet, dass** die Leiteinrichtung (21) für den Energiestrahl derart konfiguriert ist, dass der Energiestrahl quer zur und in Vorschubrichtung ausgelenkt wird.

15. Fügevorrichtung nach einem der vorhergehenden Ansprüche, **dadurch gekennzeichnet, dass** eine Düse (50) mit einem Schlitz (52) vorgesehen ist, mittels der der Draht (18) zugeführt wird.

## Claims

1. Joining device for substance-to-substance bonding by means of a filler material,
having a feed device for a wire (18) as the filler material, which is adapted to feed in the wire (18) at a given speed of advance during operation of the joining device (14), and
a guide (21) for an energy beam with at least two partial beams (26) for melting the wire (18),
**characterised in that**
the joining device (14) comprises a first measuring sensor (28) for detecting a lateral deviation of the wire (18) and
a second measuring sensor (30) for detecting a variable connected to the advance of the wire (18),
the guide (21) for the energy beam being connected to the first and second measuring sensors (28, 30) and being configured such that the energy beam is deflected and/or focussed as a function of output signals from the first and second measuring sensors (28, 30).

2. Joining device according to claim 1, **characterised in that** the first measuring sensor (28) comprises a sensor which is connected to the feed device (19) or the wire (18) and is embodied to measure the force resulting from a lateral deviation of the wire (18).

3. Joining device according to claim 1, **characterised in that** the first measuring sensor (28) comprises a camera (32) and an evaluating device (34), the evaluating device (34) evaluating an image produced by the camera (32) in order to detect the lateral deviation of the wire (18).

4. Joining device according to one of the preceding claims, **characterised in that** the second measuring sensor (30) contains a sensor (35) which is connected to the feed device (19) or the wire (18) and is embodied to measure the variable connected with the advance of the wire (18).

5. Joining device according to claim 4, **characterised in that** the wire (18) is guided in a Bowden cable (36), the end of the Bowden cable (36) that faces the end of the wire being attached to a holder (38) and the sensor (35) being arranged and embodied such that the force acting on the Bowden cable (36) can be measured.

6. Joining device according to one of the preceding claims, **characterised in that** a sensor is provided for measuring the vertical deviation of the wire (18) or of the feed device (19).

7. Joining device according to claim 6, **characterised in that** the sensor for measuring the vertical deviation is a capacitive sensor.

8. Joining device according to claim 6, **characterised in that** the sensor for measuring the vertical deviation is an autocorrelation sensor which is installed in a camera.

9. Joining device according to one of the preceding claims, **characterised in that** the at least two partial beams (26) of the energy beam are guided substantially symmetrically with respect to the wire (18), an angle (α) of at least 5° being formed between one partial beam (26) of the energy beam and the wire (18).

10. Joining device according to one of the preceding claims, **characterised in that** at least one autofocus module (20, 25) is provided which focuses the energy beam as a function of output signals from the first and second measuring sensors (28, 30).

11. Joining device according to one of the preceding claims, **characterised in that** one or more influencing means in the form of a reflector (22, 24) and/or a plane-parallel plate are provided, which deflect and/or split the energy beam.

12. Joining device according to claim 10, **characterised in that** an actuator (44, 45) is provided on the joining device, capable of moving part of the joining device (14) in the vertical direction.

13. Joining device according to one of the preceding claims, **characterised in that** a tactile element (46) is provided, the vertical and/or lateral force acting on the tactile element (46) being detectable.

14. Joining device according to one of the preceding claims, **characterised in that** the guide (21) for the energy beam is configured such that the energy beam is deflected transversely of and in the direction of advance.

15. Joining device according to one of the preceding claims, **characterised in that** a nozzle (50) is provided with a slot (52) by means of which the wire (18) is fed in.

## Revendications

1. Dispositif d'assemblage pour un assemblage à coopération de matière au moyen d'un matériau d'apport,
comprenant un dispositif d'apport d'un fil (18) comme matériau d'apport, qui est constitué pour amener le fil (18), lorsque le dispositif (14) d'assemblage fonctionne, à une vitesse d'avance prescrite, et
un dispositif (21) de guidage d'un faisceau d'énergie ayant au moins deux sous-faisceaux (26) pour faire fondre le fil (18),
**caractérisé en ce que**
le dispositif (14) d'assemblage a un premier enregistreur (28) de mesure pour la détection d'une déviation latérale du fil (18), ainsi que
un deuxième enregistreur (30) de mesure pour la détection d'une grandeur reliée à l'avance du fil (18),
dans lequel le dispositif (21) de guidage du faisceau d'énergie est relié au premier et au deuxième enregistreurs (28, 30) de mesure et est configuré de manière à ce que le faisceau d'énergie soit dévié et/ou focalisé en fonction de signaux de sortie du premier et du deuxième enregistreurs (28, 30) de mesure.

2. Dispositif d'assemblage suivant la revendication 1, **caractérisé en ce que** le premier enregistreur (28) de mesure comporte un capteur, qui est relié au dispositif (19) d'apport ou au fil (18) et qui est constitué de manière à détecter la force provenant d'une déviation latérale du fil (18).

3. Dispositif d'assemblage suivant la revendication 1, **caractérisé en ce que** le premier enregistreur (28) de mesure comporte une caméra (32) et un dispositif (34) d'exploitation, le dispositif (34) d'exploitation exploitant une image produite par la caméra (32) pour détecter la déviation latérale du fil (18).

4. Dispositif d'assemblage suivant l'une des revendications précédentes, **caractérisé en ce que** le deuxième enregistreur (30) de mesure comporte un capteur (35), qui est relié au dispositif (19) d'apport ou au fil (18) et qui est constitué pour détecter la grandeur reliée à l'avance du fil (18).

5. Dispositif d'assemblage suivant la revendication 4, **caractérisé en ce que** le fil (18) est guidé dans un câble (36) Bowden, l'extrémité, tournée vers l'extrémité du fil, du câble (36) Bowden étant fixée à une fixation (38) et le capteur (35) étant disposé et constitué de manière à pouvoir détecter la force agissant sur le câble (36) Bowden.

6. Dispositif d'assemblage suivant l'une des revendications précédentes, **caractérisé en ce qu'**il est prévu un capteur de détection de la déviation verticale du fil (18) ou du dispositif (19) d'apport.

7. Dispositif d'assemblage suivant la revendication 6, **caractérisé en ce que** le capteur de détection de la déviation verticale est un capteur capacitif.

8. Dispositif d'assemblage suivant la revendication 6, **caractérisé en ce que** le capteur de détection de la déviation verticale est un capteur d'autocorrélation, qui est inséré dans une caméra.

9. Dispositif d'assemblage suivant l'une des revendications précédentes, **caractérisé en ce que** les au moins deux sous-faisceaux (26) du faisceau d'énergie sont guidés d'une manière sensiblement symétrique par rapport au fil (18), un angle (α) d'au moins 5° étant présent entre un sous-faisceau (26) du faisceau d'énergie et le fil (18).

10. Dispositif d'assemblage suivant l'une des revendications précédentes, **caractérisé en ce qu'**il est prévu au moins un module (20, 25) de focalisation automatique, qui focalise le faisceau d'énergie en fonction de signaux de sortie du premier et du deuxième enregistreurs (28, 30) de mesure.

11. Dispositif d'assemblage suivant l'une des revendications précédentes, **caractérisé en ce qu'**il est prévu un ou plusieurs moyens d'influence sous la forme d'un miroir (22, 24) et/ou d'une lame à face parallèle, qui dévie et/ou divise le faisceau d'énergie.

12. Dispositif d'assemblage suivant la revendication 10, **caractérisé en ce qu'**il est prévu sur le dispositif d'assemblage un actionneur (44, 45), qui peut déplacer le dispositif (14) d'assemblage dans la direction verticale.

13. Dispositif d'assemblage suivant l'une des revendications précédentes, **caractérisé en ce qu'**il est prévu un élément (46) palpeur, la force verticale et/ou latérale s'appliquant à l'élément (46) palpeur pouvant être détectée.

14. Dispositif d'assemblage suivant l'une des revendications précédentes, **caractérisé en ce que** le dispositif (21) de guidage du faisceau d'énergie est configuré de manière à dévier le faisceau d'énergie transversalement à la direction d'avance et dans la direction d'avance.

15. Dispositif d'assemblage suivant l'une des revendications précédentes, **caractérisé en ce qu'**il est prévu une buse (50) ayant une fente (52), au moyen de laquelle le fil (18) est apporté.
